# EUROPÄISCHE PATENTANMELDUNG

(11) **EP 2 502 721 A2**
(43) Veröffentlichungstag der Anmeldung: **26.09.2012**
(21) Anmeldenummer: 12159568.0
(22) Anmeldetag: 15.03.2012
(51) Int. Cl.: B27G 11/02, B05C 1/00, F27D 3/00, C09J 5/06

(54) **Einrichtung zum Aufschmelzen von Heißleim für Produkte der Tabak verarbeitenden Industrie**

(30) Priorität: 24.03.2011 DE 102011015045
(71) Anmelder: HAUNI Maschinenbau AG, 21033 Hamburg (DE)
(72) Erfinder: Zeuner, Dirk, 21493 Schwarzenbek (DE); Masch, Simon, 99958 Tonna (DE); Meyer, Ralf, 29581 Gerdau / Bohlsen (DE)
(74) Vertreter: Müller Verweyen

(57) **Zusammenfassung**

Die Erfindung betrifft eine Einrichtung zum Aufschmelzen von Heißleimgranulat für Produkte der Tabak verarbeitenden Industrie, insbesondere für Filter, mit
-einem Heißleimschmelzbehälter (4), dem eine Heizeinrichtung (5) zugeordnet ist, mittels derer das in dem Heißleimschmelzbehälter (4) vorhandene Heißleimgranulat aufschmelzbar ist, wobei
-ein Vorratsspeicher (20) und eine Fördereinrichtung (24) vorgesehen sind, und
-dass der Heißleim aus dem Vorratsspeicher (20) mittels der Fördereinrichtung (24) dem Heißleimschmelzbehälter (4) kontinuierlich und dosiert zuführbar ist.

## Beschreibung

Die Erfindung betrifft eine Einrichtung zum Aufschmelzen von Heißleimgranulat für Produkte der Tabak verarbeitenden Industrie, insbesondere für Filter, mit den Merkmalen des Oberbegriffs von Anspruch 1.

Heißleim (Hotmelt) wird in den Produkten der Tabak verarbeitenden Industrie zum Verkleben des Filterpapiers oder zum Fixieren von Filtersegmenten in Multifiltern verwendet. Der Heißleim selbst ist aus einem hydrophoben Schmelzklebstoff gebildet, welcher bei niedrigen Temperaturen (z.B. bei einer Raumtemperatur von 20 Grad Celsius) fest und nicht klebend ist und aus thermoplastischen Polymeren besteht. Der Heißleim wird als Granulat angeliefert und als Schüttgut in einen Heißleimschmelzbehälter gegeben, in dem er zu einer fließfähigen Masse aufgeschmolzen wird. Im weiteren Herstellungsprozess wird der fließfähige Heißleim kontinuierlich über Pumpen einer Auftragvorrichtung zugeführt, in der der Heißleim z.B. auf eine Randzone des Filterpapiers aufgetragen wird. Anschließend wird der Filterstrang mit dem durch den Heißleim verklebten Filterpapier gekühlt, so dass die Filter anschließend von dem schnittfesten Strang abgetrennt werden können. Je nach der Verwendung von mehreren parallelen Strängen zur Herstellung der Filter wird der Heißleim über mehrere Düsen aufgetragen.

Dem Heißleimschmelzbehälter ist eine Heizeinrichtung zugeordnet, mittels derer das in dem Heißleimschmelzbehälter befindliche Granulat aufgeschmolzen wird.

Aufgrund der von der Heizeinrichtung erzeugten Wärme schmilzt das Heißleimgranulat oder die erkaltete, von einem vorangegangenen Verarbeitungsprozess noch übrig gebliebene Heißleimmasse beim Anfahren der Heißleimschmelzvorrichtung von außen nach innen auf, wobei die Aufheizphase bis zum Aufschmelzen einer für den Betrieb der gesamten Anlage ausreichenden Menge von Heißleim bis zu 30 Minuten dauern kann. Dabei ist es insbesondere von Nachteil, dass der Heißleim selbst eine geringe Wärmeleitfähigkeit aufweist, und es dadurch verhältnismäßig lange dauert, bis der Heißleim auch in der Mitte des Schmelztopfes aufschmilzt. Infolgedessen ist es nicht zu vermeiden, dass der Heißleim unter ungünstigen Umständen in der Mitte des Schmelztopfes nicht vollständig aufgeschmolzen wird und stattdessen auch nach längerem Betrieb der Heißleimschmelzvorrichtung in der Mitte der Heißleimmasse noch zu einem festen Klumpen verklebt ist.

Für den Fall, dass der Heißleim wiederholt aufgeschmolzen wird und dadurch zu lange thermisch beansprucht wird, besteht außerdem die Gefahr, dass der Heißleim "crackt", dass heißt die Polymere des Heißleims zersetzen sich, wodurch Ablagerungen an der beheizten Oberfläche der Heißleimschmelze entstehen. Diese Ablagerungen wirken isolierend, so dass das Aufschmelzen verzögert wird. Außerdem kann der Heißleim durch die Ablagerungen optisch verfärbt sein.

Außerdem kann die Heizleistung der Heizeinrichtung grundsätzlich nicht beliebig hoch gewählt werden, da der Heißleim in diesem Fall nicht homogen aufgeschmolzen wird, und der Heißleim in der an der Wandung des Heißleimschmelzbehälters angrenzenden Randzone übermäßig stark erhitzt wird und dadurch ebenfalls "cracken" kann.

Der Schmelzvorgang des Heißleimgranulats beginnt je nach der Leimsorte bei 27 - 40 Grad Celsius und endet bei einer Temperatur von 75 - 110 Grad Celsius.

Da die Auffüllintervalle grundsätzlich nicht zu kurz bemessen sein sollten, so dass der mit dem Auffüllen des Heißleimschmelzbehälters verbundene Aufwand auf ein vertretbares Maß reduziert ist, weist der Heißleimschmelzbehälter ein Füllvolumen von ca. 9 l auf. Die gesamte Einrichtung kann damit z.B. bei einer zweisträngigen Herstellmaschine für die Filter beim Aufbringen von Naht- und Innenleim ca. 1 h betrieben werden. Für den Fall, dass der gesamte Heißleimschmelzbehälter mit noch nicht aufgeschmolzenem Granulat aufgefüllt ist, ergibt sich eine Kaltstartzeit von ca. 30 Minuten, bis eine ausreichende Menge an aufgeschmolzenem Heißleim für einen kontinuierlichen Betrieb der Einrichtung zur Verfügung steht.

Aufgabe der Erfindung ist es, eine Einrichtung zum Aufschmelzen von Heißleimgranulat zu schaffen, bei der das Heißleimgranulat in möglichst langen Befüllungsintervallen nachgefüllt werden muss und gleichzeitig ohne Qualitätsnachteile schnell aufgeschmolzen werden kann.

Zur Lösung der Aufgabe wird eine Einrichtung mit den Merkmalen von Anspruch 1 vorgeschlagen. Weitere bevorzugte Weiterentwicklungen der Erfindung sind den Unteransprüchen, den Figuren und der zugehörigen Beschreibung zu entnehmen.

Gemäß dem Grundgedanken der Erfindung wird vorgeschlagen, dass in der Einrichtung ein Vorratsspeicher und eine Fördereinrichtung vorgesehen sind, und dass das Heißleimgranulat aus dem Vorratsspeicher mittels der Fördereinrichtung dem Heißleimschmelzbehälter kontinuierlich und dosiert zuführbar ist. Der Vorteil der vorgeschlagenen Lösung ist darin zu sehen, dass das Nachfüllen des Heißleimgranulats nicht unmittelbar in den Heißleimschmelzbehälter erfolgt, wie das im Stand der Technik der Fall ist, sondern in einen Vorratsspeicher, welcher ein erheblich größeres Volumen aufweisen kann, so dass die Nachfüllintervalle wesentlich länger bemessen werden können. Ferner wird das Heißleimgranulat dem Heißleimschmelzbehälter mittels einer Fördereinrichtung dosiert zugeführt, so dass der Heißleim nicht in der Gesamtmenge auf einmal in den Heißleimschmelzbehälter gegeben wird, sondern stattdessen dosiert in einem geringeren Mengenstrom, so dass jeweils die zugeführte Menge an Heißleimgranulat in einem festen Verhältnis zu der Aufschmelzrate des Heißleimgranulats ausgelegt werden kann. Ein weiterer sich aus der Erfindung ergebender Vorteil ist darin zu sehen, dass das Volumen des beheizten Heißleimschmelzbehälters wesentlich kleiner bemessen werden kann, da dieser nicht die gesamte aufzuschmelzende Menge an Heißleim auf einmal aufnehmen muss. Diese geringere Menge an Heißleimgranulat kann dann wesentlich kontrollierter und in einer besseren Qualität aufgeschmolzen werden, wobei außerdem die Anfahrzeit verkürzt werden kann. Ferner ist die in dem Heißleimschmelzbehälter verbleibende Menge an Heißleim bei einem Abschalten der Einrichtung geringer, so dass die Gefahr des "Cracken" durch eine übermäßig lange Temperaturbeanspruchung aufgrund eines wiederholten Aufschmelzens des Heißleims verringert werden kann.

Es hat sich herausgestellt, dass eine ideale Zuförderung des Heißleimgranulats auch in sehr kleinen Mengenströmen dadurch erzielt werden kann, wenn die Fördereinrichtung durch eine Schüttelrinne gebildet ist. Der Mengenstrom kann bei einer Schüttelrinne durch die Frequenz und die Amplitude der Schwingung, zu der die Schüttelrinne angeregt wird, eingestellt werden. Ein weiterer Vorteil der vorgeschlagenen Schüttelrinne ist darin zu sehen, dass bei der Aufgabe des Heißleimgranulats aneinander anhaftende Granulatteilchen voneinander getrennt werden, bevor sie in den Heißleimschmelzbehälter gelangen und dadurch die Dosierung weiter verbessert werden kann. Außerdem kann dadurch vermieden werden, dass die Granulatteilchen des Heißleims als größere zusammenhaftende Brocken in den Heißleimschmelzbehälter eingeführt werden, wodurch der Aufschmelzvorgang unter ungünstigen Umständen verlängert werden würde.

Weiter wird vorgeschlagen, dass die Schüttelrinne über eine flexible Dichtung an den Heißleimschmelzbehälter angeschlossen ist. Durch die vorgeschlagene Dichtung können Spalte zwischen der Schüttelrinne und dem Heißleimschmelzbehälter verschlossen werden, so dass die Granulatteilchen die Spalte nicht zusetzen und die Bewegung nicht behindern können. Außerdem kann dadurch sichergestellt werden, dass das Heißleimgranulat dem Heißleimschmelzbehälter verlustfrei zugeführt wird. Aufgrund der Flexibilität der Dichtung wird dabei gleichzeitig verhindert, dass die Schwingungen der Schüttelrinne auf den Heißleimschmelzbehälter übertragen werden.

Weiter wird vorgeschlagen, dass die Fördereinrichtung derart angeordnet ist, dass das Heißleimgranulat von oben in den Heißleimschmelzbehälter einfüllbar ist, und dass die aus dem Heißleimschmelzbehälter austretenden Gase bzw. Dämpfe durch die Fördereinrichtung austreten.

In diesem Fall sollte die Fördereinrichtung gedichtet an den Heißleimschmelzbehälter angeschlossen sein, so dass verhindert werden kann, dass die heißen Gase unmittelbar aus dem Heißleimschmelzbehälter nach außen entweichen können.

Ferner wird vorgeschlagen, dass eine zweite Fördereinrichtung vorgesehen ist, mit der der aufgeschmolzene Heißleim aus dem Heißleimschmelzbehälter einer im weiteren Verarbeitungsprozess der Filter vorgesehenen Auftrageinrichtung zuführbar ist, und dass der von der zweiten Fördereinrichtung aus dem Heißleimschmelzbehälter abgeführte Massenstrom in etwa dem von der ersten Fördereinrichtung in den Heißleimschmelzbehälter zugeführten Mengenstrom entspricht.

Weiterhin wird vorgeschlagen, dass in dem Vorratsspeicher ein von außen zu betätigender Schieber vorgesehen ist. Das Heißleimgranulat weist nach dem Einfüllen einen durch die Form des Granulats beeinflussten Böschungswinkel auf, d.h. das Granulat ist z.B. an einer Seite des Vorratsspeichers zu einer höheren Höhe aufgefüllt und fällt über den Böschungswinkel zu einer Seite zu einer niedrigeren Füllhöhe ab. Diese ungleichmäßige Auffüllung des Vorratsspeichers kann durch die Betätigung des Schiebers von außen vergleichmäßigt werden, so dass der Vorratsspeicher insgesamt bis zu seiner maximalen Füllhöhe aufgefüllt werden kann.

Weiter wird vorgeschlagen, dass dem Heißleimschmelzbehälter eine zweite Heizeinrichtung zugeordnet ist, und dass die erste Heizeinrichtung außen an oder in der Wandung des Heißleimschmelzbehälters angeordnet ist und das Heißleimgranulat von außen erhitzt, und die zweite Heizeinrichtung mit wenigstens einem Abschnitt in den Heißleimschmelzbehälter hineinragt. Das Heißleimgranulat kann dadurch von zwei unterschiedlich angeordneten Heizeinrichtungen sowohl von innen als auch von außen erhitzt werden, wodurch eine wesentlich größere Wärmemenge ohne eine Erhöhung des Temperaturniveaus in den Heißleim eingebracht werden kann. Ferner wird die Wärmemenge mit einer gleichmäßigeren Verteilung in den Heißleim eingebracht. Insgesamt kann dadurch ein gleichmäßigerer Aufschmelzvorgang auf einem geringeren Temperaturniveau mit einer verkürzten Anfahrzeit verwirklicht werden.

Insbesondere kann die zweite Heizeinrichtung Funktionselemente aufweisen, welche durch eine Antriebseinrichtung zu einer den Heißleim durchmischenden Bewegung antreibbar sind, wodurch die in den Heißleim eingebrachte Wärmemenge zusätzlich vergleichmäßigt werden kann. Ferner kann der Aufschmelzvorgang des Heißleimgranulates durch die von den Funktionselementen der zweiten Heizeinrichtung während der Bewegung ausgeübten Scherkräfte begünstigt werden, da der Heißleim aus einem strukturviskosen Grundstoff besteht, dessen Viskosität durch die Ausübung der Scherkräfte gesenkt wird.

Die Erfindung wird im Folgenden anhand bevorzugter Ausführungsformen unter Bezugnahme auf die beigefügten Figuren erläutert. Dabei zeigt:
- Fig. 1:: Einrichtung zum Aufschmelzen von Heißleimgranulat in isometrischer Ansicht;
- Fig. 2:: Einrichtung zum Aufschmelzen von Heißleimgranulat in Schnittdarstellung;
- Fig. 3:: Heißleimschmelzbehälter zum Aufschmelzen von Heißleimgranulat in vergrößerter Darstellung.

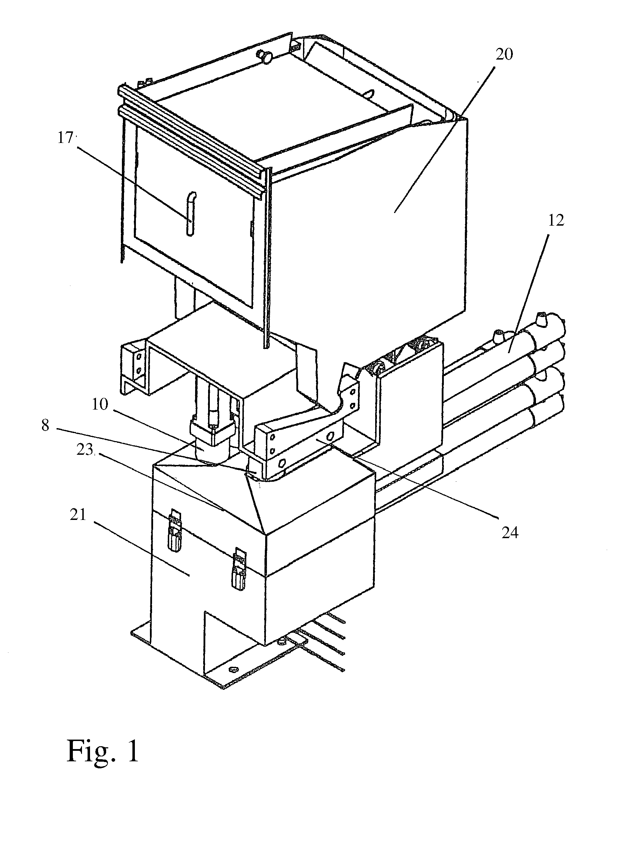

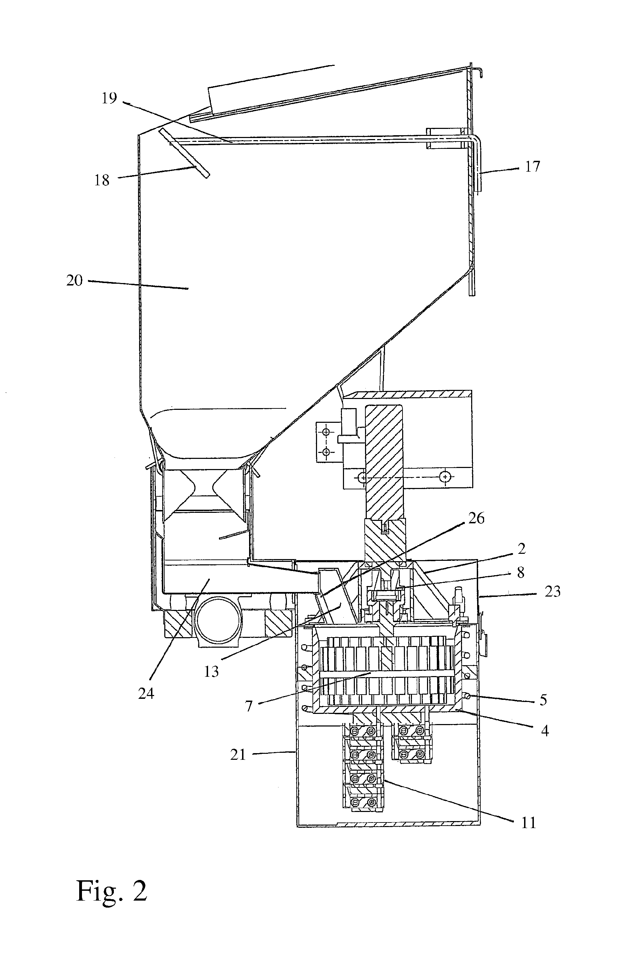

In den Figuren 1 und 2 ist eine erfindungsgemäße Einrichtung zum Aufschmelzen von Heißleimgranulat zu flüssigem Heißleim, oder auch Hotmelt genannt, für Produkte der Tabak verarbeitenden Industrie, insbesondere für Filter in isometrischer Ansicht und in Schnittdarstellung zu erkennen. Die Einrichtung ist Bestandteil einer übergeordneten Anlage, in der die Produkte in einem kontinuierlichen Herstellungsprozess aus den Rohmaterialien hergestellt werden. Der in dieser Einrichtung aufgeschmolzene Heißleim wird dabei z.B. zum Verkleben der Filterpapierränder verwendet und in einer nicht dargestellten Auftrageinrichtung über eine Düse in einem dünnen Film auf einen der Ränder des Filterpapiers aufgetragen.

Die Einrichtung umfasst einen Vorratsspeicher 20 in Form eines großen Heißleimschmelzbehälters mit einem Volumen von vorzugsweise 70 l. In dem Vorratsspeicher 20 ist ein von außen zu betätigender Schieber 17 mit einer Zugstange 19 und einer Schieberplatte 18 angeordnet, mit dem das eingefüllte Heißleimgranulat zum Ausgleich des beim Einfüllen entstandenen Böschungswinkels an der Oberseite glatt gezogen werden kann. Unter dem Begriff Böschungswinkel wird allgemein der sich beim Aufschütten des Heißleimgranulats ergebende Winkel des Schüttguthaufens verstanden, welcher in Abhängigkeit von der Form des Granulats des Heißleims variieren kann.

An der Unterseite des Vorratspeichers 20 ist eine erste Fördereinrichtung 24 in Form einer Schüttelrinne vorgesehen, welche zu einer Schwingbewegung antreibbar ist. Aufgrund der Schwingbewegung wird das darauf liegende Heißleimgranulat in Richtung einer an dem Ende der Schüttelrinne vorgesehenen Einfüllöffnung 13 gerüttelt. Die Transportbewegung des Heißleimgranulats kann dabei durch eine geringfügige Schrägstellung der Schüttelrinne unterstützt werden.

Die Einfüllöffnung 13 mündet von oben in einen Heißleimschmelzbehälter 4 und ist über eine elastische Dichtung 26 in Form einer Manschette derart an das Ende der Schüttelrinne angeschlossen, dass das Heißleimgranulat nicht an dem Heißleimschmelzbehälter 4 vorbei fallen kann. Die Manschette selbst ist elastisch ausgebildet, so dass die Schwingbewegung der Schüttelrinne nicht auf den Heißleimschmelzbehälter übertragen wird. Der Heißleimschmelzbehälter 4 wird durch eine an der Außenseite angeordnete, erste induktive Heizeinrichtung 5 und eine in den Heißleimschmelzbehälter 4 ragende zweite Heizeinrichtung 7 beheizt, so dass das in den Heißleimschmelzbehälter 4 einfallende Heißleimgranulat sowohl von innen als auch von außen zu einer flüssigen Heißleimmasse aufgeschmolzen wird. Aufgrund der zwei verwendeten Heizeinrichtungen 5 und 7 kann das Heißleimgranulat gleichmäßig und auf einer relativ geringen im oberen Bereich des Schmelzbereichs oder kurz darüber befindlichen Temperatur aufgeschmolzen werden. Damit ist die Gefahr des "crackens" sehr gering. Hinsichtlich eines möglichst schnellen und dennoch gleichmäßigen Aufschmelzens hat sich dabei ein Temperaturniveau von 120-140 Grad als sinnvoll herausgestellt. Sofern eine der Heizeinrichtungen 5 oder 7 als induktive Heizeinrichtung ausgebildet ist, kann die jeweils andere Heizeinrichtung 5 oder 7 als passive Heizeinrichtung ausgelegt werden und sich durch die Bewegung in dem Magnetfeld der jeweils anderen Heizeinrichtung 5 oder 7 selbstständig erhitzen. Wichtig ist nur, dass der Heißleim durch zwei voneinander getrennte Wärmequellen aufgeschmolzen wird.

Die zweite Heizeinrichtung 7 ist in dem in den Heißleimschmelzbehälter 4 ragenden Abschnitt mit einem gitterförmigen Funktionselement in Form eines Rotors versehen, welcher mittels einer Antriebseinrichtung 8 zu einer Drehbewegung antreibbar ist, so dass das Gemisch aus flüssigem Heißleim bzw. noch nicht ganz aufgeschmolzenem Heißleimgranulat durch die Heizeinrichtung 7 durchmischt wird, und die in die Heißleimmasse eingebrachte Wärme verteilt wird. Die Antriebseinrichtung 8 ist über eine Trägereinheit 2 an der Einrichtung und dem Heißleimschmelzbehälter 4 befestigt und nach außen hin durch eine Abdeckung 23 abgedeckt.

An der Unterseite des Heißleimschmelzbehälters 4 ist eine zweite Fördereinrichtung 11 vorgesehen, die den aufgeschmolzenen Heißleim weiter zu der Auftrageinrichtung fördert. Der von der zweiten Fördereinrichtung 11 abgeförderte Massenstrom an flüssigem Heißleim sollte in einem festen Verhältnis und vorzugsweise sogar identisch zu dem von der ersten Fördereinrichtung 24 zugeförderten Massenstrom von festem, granulatförmigem Heißleim sein. Die Einrichtung kann dadurch über einen längeren Zeitraum kontinuierlich betrieben werden, bis der Vorratsspeicher 20 geleert ist, oder die Anlage heruntergefahren wird, ohne dass zwischenzeitlich Maßnahmen seitens des Bedienpersonals zu ergreifen sind. Im Idealfall befindet sich in dem Heißleimschmelzbehälter 4 dadurch immer eine konstante Menge an Heißleimgranulat und/oder flüssigem Heißleim, so dass der Aufschmelzvorgang gleichmäßig bei einem geringen aufzuschmelzenden Volumen auf einem möglichst niedrigen Temperaturniveau erfolgen kann. Das Volumen des Heißleimschmelzbehälters 4 kann z.B. vorzugsweise 2 l betragen, was hinsichtlich der erwünschten Massenströme ausreichend ist. Aufgrund des geringen Volumens des Heißleimschmelzbehälters 4 kann die Anfahrzeit bis zum Bereitstellen einer ausreichenden Menge an flüssigem Heißleim für die Anlage von 30 Minuten auf ca. 5 Minuten verkürzt werden. Die zweite Fördereinrichtung 11 ist nach außen ebenfalls durch eine Abdeckung 21 abgedeckt, welche gleichzeitig als Standfuß für die gesamte Einrichtung dient.

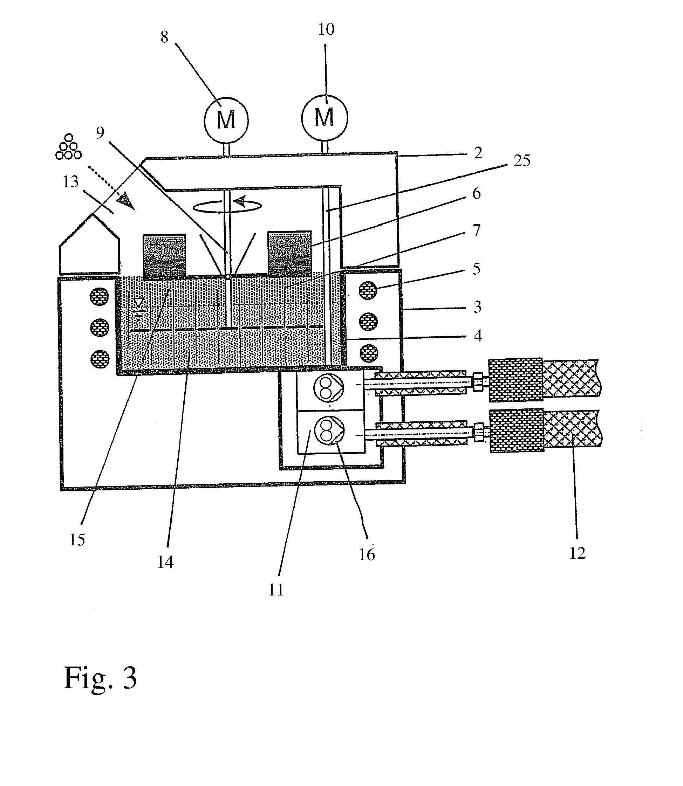

In der Figur 3 ist der in der Einrichtung vorgesehene Heißleimschmelzbehälter 4 vergrößert zu erkennen. An dem topfförmigen Heißleimschmelzbehälter 4 ist die außen an der Wandung des Heißleimschmelzbehälters 4 angeordnete erste Heizeinrichtung 5 zu erkennen, welche als Induktionsheizeinrichtung mit mehreren, den Heißleimschmelzbehälter 4 umfassenden Wicklungen aus elektrischen Leitern ausgebildet und in einer Isolationsschicht des Heißleimschmelzbehälters 4 oder alternativ bei einer entsprechenden Dicke der Wandung auch in der Wandung des Heißleimschmelzbehälters 4 angeordnet ist. Ferner ist die in den Heißleimschmelzbehälter 4 hineinragende zweite Heizeinrichtung 7 zu erkennen, welche mittels der Antriebseinrichtung 8 über eine Antriebswelle 9 zu einer rotatorischen Bewegung antreibbar ist. Sinnvollerweise wird die Drehrichtung der Antriebseinrichtung 8 in Intervallen umgedreht, so dass die Heißleimmasse noch stärker vermischt und verwirbelt wird.

Der Heißleimschmelzbehälter 4 ist an der Oberseite mit der Trägereinheit 2 versehen, welche die Antriebseinrichtung 8 und die Antriebswelle 9 trägt. In der Trägereinheit 2 ist ein Freiraum vorgesehen, durch den die Manschette 26 geführt ist, welche die Einfüllöffnung 13 bildet, durch die der Heißleimgrundwerkstoff in Form von Granulat als Schüttgut über die Fördereinrichtung 24 dosiert einfüllbar ist. Beim Aufschmelzen des Heißleimgranulats bildet sich in dem Heißleimschmelzbehälter 4 eine untere flüssige Heißleimphase 14, welche nach oben hin durch eine Schicht 15 von teilweise aufgeschmolzenem und noch nicht aufgeschmolzenem Granulat abgedeckt ist. An der Unterseite des Heißleimschmelzbehälters 4 ist die zweite Fördereinrichtung 11 mit mehreren Pumpen 16 und beheizten Schläuchen 12 vorgesehen, über die der flüssige Heißleim kontinuierlich abgeführt und einer nicht dargestellten Auftrageinrichtung zugeführt wird. Die Auftrageinrichtung ist Teil einer Anlage, in der der Heißleim auf das Filterpapier der herzustellenden Produkte aufgetragen wird. Die Anlage kann z.B. eine Ein- oder Mehrstranganlage sein, in der die Filter mittels des Filterpapiers fixiert und als Standardfilter oder Multifilter an die Produkte angesetzt werden.

Die Pumpen 16 sind über eine Antriebseinrichtung 10 antreibbar, welche über eine durch die Heißleimphase 14 geführte Welle 25 mit den Pumpen 16 verbunden ist. Dadurch muss die Welle 25 nicht gesondert abgedichtet werden. Außerdem kann die Welle 25 zusätzlich mit einer außenseitigen Spiralkontur versehen werden, so dass sie gleichzeitig eine Umwälzung der Heißleimmasse zwischen der Heißleimphase 14 und der Schicht 15 bewirkt. Ferner sind an der zweiten Heizeinrichtung 7 Abstreifbleche 6 mit schräggerichteten Anlaufflächen vorgesehen, welche die noch nicht aufgeschmolzenen festen Granulatteilchen des Heißleims in die flüssige Heißleimphase 14 eindrücken. Die Abstreifbleche 6 können alternativ auch an dem Heißleimschmelzbehälter 4 feststehend angeordnet sein, wichtig ist nur dass die Granulatteilchen des Heißleims eine Relativbewegung zu den Abstreifblechen 6 ausführen, während der sie an den schräggerichteten Anlaufflächen zur Anlage gelangen und im weiteren Bewegungsablauf in die Heißleimphase 14 eingedrückt werden.

## Patentansprüche

1. Einrichtung zum Aufschmelzen von Heißleimgranulat für Produkte der Tabak verarbeitenden Industrie, insbesondere für Filter, mit
- einem Heißleimschmelzbehälter (4), dem eine Heizeinrichtung (5) zugeordnet ist, mittels derer das in dem Heißleimschmelzbehälter (4) vorhandene Heißleimgranulat aufschmelzbar ist,
**dadurch gekennzeichnet, dass**
- ein Vorratsspeicher (20) und eine Fördereinrichtung (24) vorgesehen sind, und
- dass der Heißleim aus dem Vorratsspeicher (20) mittels der Fördereinrichtung (24) dem Heißleimschmelzbehälter (4) kontinuierlich und dosiert zuführbar ist.

2. Einrichtung nach Anspruch 1, **dadurch gekennzeichnet, dass**
- die Fördereinrichtung (24) durch eine Schüttelrinne gebildet ist.

3. Einrichtung nach Anspruch 2, **dadurch gekennzeichnet, dass**
- die Schüttelrinne über eine flexible Dichtung an den Heißleimschmelzbehälter angeschlossen ist.

4. Einrichtung nach einem der vorangegangenen Ansprüche, **dadurch gekennzeichnet, dass**
- die Fördereinrichtung (24) derart angeordnet ist, dass das Heißleimgranulat von oben in den Heißleimschmelzbehälter (4) einfüllbar ist, und
- dass die Fördereinrichtung (24) derart an den Heißleimschmelzbehälter (4) angeschlossen ist, dass die aus dem Heißleimschmelzbehälter (4) austretenden Gase durch die Fördereinrichtung (24) austreten.

5. Einrichtung nach Anspruch 4, **dadurch gekennzeichnet, dass**
- die Fördereinrichtung (24) gedichtet an den Heißleimschmelzbehälter (4) angeschlossen ist.

6. Einrichtung nach einem der vorangegangenen Ansprüche, **dadurch gekennzeichnet, dass**
- eine zweite Fördereinrichtung (11) vorgesehen ist, mit der der aufgeschmolzene Heißleim aus dem Heißleimschmelzbehälter (4) abführbar ist, und
- dass der von der zweiten Fördereinrichtung (11) aus dem Heißleimschmelzbehälter (4) abgeführte Mengenstrom in etwa dem von der ersten Fördereinrichtung (24) in den Heißleimschmelzbehälter (4) zugeführten Mengenstrom entspricht.

7. Einrichtung nach einem der vorangegangenen Ansprüche, **dadurch gekennzeichnet, dass**
- in dem Vorratsspeicher (20) ein von außen zu betätigender Schieber (17) vorgesehen ist.

8. Einrichtung nach einem der vorangegangenen Ansprüche, **dadurch gekennzeichnet, dass**
- dem Heißleimschmelzbehälter (4) eine zweite Heizeinrichtung (7) zugeordnet ist, und
- dass die erste Heizeinrichtung (5) außen an oder in der Wandung des Heißleimschmelzbehälters (4) angeordnet ist und den Heißleim von außen erhitzt, und
- die zweite Heizeinrichtung (7) mit wenigstens einem Abschnitt in den Heißleimschmelzbehälter (4) hineinragt.

9. Einrichtung nach Anspruch 8, **dadurch gekennzeichnet, dass**
- die zweite Heizeinrichtung (7) durch eine Antriebseinrichtung (8) zu einer das Heißleimgranulat durchmischenden Bewegung antreibbar ist.
